# EUROPÄISCHE PATENTSCHRIFT

(11) **EP 1 291 517 B1**
(45) Veröffentlichungstag und Bekanntmachung des Hinweises auf die Patenterteilung: **12.09.2012**
(21) Anmeldenummer: 02015323.5
(22) Anmeldetag: 10.07.2002
(51) Int. Cl.: F02D 41/38, F02D 41/06, F02M 63/02, F02M 55/00, F02M 59/44, F02M 31/12, F02M 37/10

(54) **Verfahren zum Betrieb einer Kraftstoff-Einspritzanlage, und Kraftstoff-Einspritzanlage hierzu**
Method for operating of a fuel injection device and fuel injection device for it
Procédé d'utilisation d'un dispositif d'injection de carburant et dispositif d'injection de carburant relatif

(30) Priorität: 08.09.2001 DE 10144195
(43) Veröffentlichungstag der Anmeldung: 12.03.2003
(73) Patentinhaber: Daimler AG, 70327 Stuttgart (DE)
(72) Erfinder: Eiblmeier, Ulrich, 70599 Stuttgart (DE); Köhl, Günter, 73630 Remshalden (DE); Schmalzing, Claus-Oliver, 73760 Ostfildern (DE)
(74) Vertreter: JENSEN & SON

(56) Entgegenhaltungen:
- DE-A1- 10 056 048
- DE-C1- 19 714 488
- DE-C1- 19 732 674

## Beschreibung

Die Erfindung betrifft ein Verfahren zum Betrieb einer Kraftstoff-Einspritzanlage für mit Speicherdruckeinspritzung arbeitende Brennkraftmaschinen und über einen Tank führendem Kraftstoffkreislauf gemäß dem Oberbegriff des Anspruches 1, sowie eine Kraftstoff-Einspritzanlage hierzu.

Bei einem bekannten Verfahren der eingangs genannten Art (DE 197 14 488 C1) wird der der auf den Druckspeicher fördernden Hochdruckpumpe zugeführte Kraftstoff temperaturabhängig im Volumenstrom dahingehend geregelt, dass die Fördermenge der Hochdruckpumpe bei einer Kraftstoff-Mindesttemperatur, die über einer Betriebsfähigkeitstemperatur des Kraftstoffes liegt, der über die an den Druckspeicher angeschlossenen Einspritzinjektoren eingespritzten Menge entspricht. Als Rücklauf ergeben sich damit im wesentlichen nur Leck- und Schmiermengen sowie aus Ungenauigkeiten in der Abstimmung der eingeregelten Volumenstrommenge auf die über die Injektoren eingespritzte Menge resultierende, kleine Mehrmengen, die in Abhängigkeit vom Druck im Druckspeicher über ein Druckregelventil im Kraftstoffkreislauf abgeführt werden. Bei Kraftstofftemperaturen, die unterhalb einer an der Betriebsfähigkeitstemperatur orientierten Mindesttemperatur liegen, erfolgt die Volumenstromregelung im Zulauf auf die Hochdruckpumpe derart, dass sich gegenüber der über die Einspritzinjektoren eingespritzten Kraftstoffmenge eine Übermenge ergibt, die, entsprechend dem dadurch sich aufbauenden Überdruck im Druckspeicher, über das Druckregelventil abgeführt wird, so dass sich entsprechend der Entspannung eine Erwärmung der abgeführten Überschussmenge ergibt. Dem Druckregelventil ist im Kraftstoffkreislauf ein Schaltventil nachgeordnet, das temperaturabhängig angesteuert ist und über das die bei unterhalb der Kraftstoff-Mindesttemperatur liegender Kraftstofftemperatur anfallende Kraftstoffübermenge zwischen Hochdruckpumpe und Tank auf den Zulauf zur Hochdruckpumpe eingespeist wird. Ist die angesprochene Temperaturschwelle überschritten, so steuert das Schaltventil um und führt bei auf die eingespritzte Kraftstoffmenge abgestimmter Fördermenge der Hochdruckpumpe die über das Druckregelventil eventuell abgezweigte Restmenge, einschließlich Leck- und Schmiermengen, auf den Tank zurück. Eine derartige Ausbildung ermöglicht zwar fallweise schnelle Aufheizzeiten, beschränkt auf die der Hochdruckpumpe im Zulauf unmittelbar zugeführte Kraftstoffmenge. Das Tankvolumen, insbesondere der Zulauf auf die Vorförderpumpe werden von der Kraftstofferwärmung aber relativ spät erfasst, und dies trotz des mit der Verwendung eines temperaturabhängig arbeitenden Schaltventiles verbundenen Aufwandes.

Der Erfindung liegt die Aufgabe zugrunde, für ein Verfahren der eingangs genannten Art den Ablauf zu vereinfachen und zu einem einfacheren Aufbau der zugehörigen Kraftstoff-Einspritzanlage zu kommen.

Gemäß der Erfindung wird dies bei einem Verfahren nach dem Anspruch 1 dadurch erreicht, dass der Kraftstoffrücklauf insgesamt ausschließlich über den Tank geführt ist, also im Kraftstoffkreislauf keine Umgehung des Tankes vorgesehen ist, und zwar sowohl bei im Hinblick auf die Verdichtung einer Überschussmenge betriebener Hochdruckpumpe mit nachfolgender Druckentspannung wie auch bei im Fördervolumen auf die benötigte tatsächliche Einspritzmenge abgestimmter Hochdruckpumpe, so dass im Falle einer der Betriebsfähigkeitstemperatur als Grenztemperatur entsprechenden oder darüberliegenden Kraftstofftemperatur rücklaufseitig gegebenenfalls nur Leck- und Schmiermengen anfallen, die ebenfalls auf den Kraftstofftank abgeführt werden. Insgesamt ergibt sich somit ein besonders einfacher Aufbau.

Im Rahmen der Erfindung kann die Hochdruckpumpe bei unter der Mindesttemperatur liegender Kraftstofftemperatur bevorzugt ohne Volumenbegrenzung betrieben werden, wodurch sich besondere Vorkehrungen bezüglich der Volumenstromregelung bei tiefen, unterhalb der Mindesttemperatur liegenden Kraftstofftemperaturen vermeiden lassen, insbesondere auch eine volle Ausnutzung der Pumpkapazität zum Zwecke der Kraftstoffaufheizung erreicht wird.

Bezüglich des Aufbaus einer Kraftstoff-Einspritzanlage führt die erfindungsgemäße Ausgestaltung derselben mit unmittelbarer Zuführung des Rücklaufs auf den Tank ohne zwischengeschaltete Umschaltorgane zu einer wesentlichen Vereinfachung, wobei es sich als zweckmäßig erweist, das Druckregelventil und den pumpenseitigen Anschluss an den Druckspeicher gegenüberliegenden Endbereichen desselben zuzuordnen, so dass der Druckspeicher bei rohrförmiger Ausbildung im wesentlichen über seine Länge durchströmt und dadurch auch in der Aufheizphase des Kraftstoffes im wesentlichen temperaturausgeglichen ist.

Besonders wirkungsvoll ist die erfindungsgemäße Aufheizung des Kraftstoffes in Verbindung mit einer Tankanlage, bei der ein separiertes Tankvolumen, beispielsweise das Volumen eines Schlingertopfes, aus dem die Vorförderpumpe ansaugt, gesondert mit der Rücklaufleitung verbunden ist, so dass die Aufheizung auf einen Bruchteil des Tankvolumens konzentriert durchgeführt wird, wodurch das System sehr schnell anspricht. Der Zulauf auf das separierte Tankvolumen, insbesondere den Schlingertopf, erfolgt zweckmäßigerweise über eine in den Tank integrierte Saugstrahlpumpe, auf die die Rücklaufleitung mündet.

Insbesondere bei gekammerten oder anderweitig in mehrere Tankbereiche unterteilten Tanks und der dadurch gegebenen Notwendigkeit der Zwangsförderung des Kraftstoffes im Tank erweist es sich als zweckmäßig, den Tankbereichen Saugstrahlpumpen zuzuordnen, die parallel an die Rücklaufleitung angeschlossen sind, und über die Saugstrahlpumpen den auf diese über den Rücklauf zugeführten, erwärmten Kraftstoff vermischt mit dem Tank unmittelbar entnommenen Kraftstoff auf das separierte Tankvolumen, also insbesondere den Schlingertopf fördern. Als Folge der schlechteren Fließfähigkeit des kalten, durch den Injektoreffekt aus dem Tank angesaugten Kraftstoffes, insbesondere Dieselkraftstoffes erbringt eine solche Anordnung zunächst eine verstärkte Versorgung des separierten Tankvolumens mit aus dem Rücklauf zugeführtem, erwärmtem Kraftstoff, so dass auch bei einer erfindungsgemäßen Lösung mit unmittelbarem Rücklauf auf den Tank die angestrebte schnelle Erwärmung des der Hochdruckpumpe zugeführten Kraftstoffes erreicht wird.

Auch bei einheitlichem, ungekammertem Tankvolumen und in diesem liegendem separiertem Tankvolumen, insbesondere Schlingertopf, erweist sich die Zuführung des Kraftstoffes zum separierten Tankvolumen über eine Saugstrahlpumpe als zweckmäßig, und dies im Rahmen der Erfindung insbesondere in Verbindung mit einer die Saugstrahlpumpe umgehenden Parallelverbindung der Rücklaufleitung zum separierten Tankvolumen, wobei die Parallelverbindung, insbesondere in Form eine Bypassverbindung, zweckmäßigerweise einen Drosselquerschnitt bildet oder enthält, so dass ein paralleler Zulauf auf das separierte Tankvolumen über den Injektor der Saugstrahlpumpe und den Bypass möglich ist, wobei eine entsprechende Abstimmung der Querschnitte eine entsprechende Steuerung des jeweiligen Durchtrittsvolumens ermöglicht, das damit auch temperaturabhängig beeinflussbar ist. Besonders zweckmäßig ist es, die angesprochenen Querschnitte bei einheitlichem Tankvolumen und bei gekammertem Tankvolumen gleich zu halten, so dass ein gekammerter Tank gegebenenfalls gegen einen ein einheitliches Tankvolumen aufweisenden Tank ausgetauscht werden kann und die Einspritzanlage somit gegebenenfalls ohne Änderungen in verschiedenen Fahrzeugen betrieben werden kann, die sich durch die Verwendung der unterschiedlichen Tankarten unterscheiden.

Dies kann beispielsweise in Verbindung mit Motoren der Fall sein, die in Personenkraftwagen und Lieferwagen eingesetzt sind, wobei fallweise Personenkraftwagen mit Kardantunnel die Verwendung eines gekammerten Tankes verlangen.

Weitere Einzelheiten und Merkmale der Erfindung ergeben sich aus den Ansprüchen. Ferner wird die Erfindung nachstehend anhand zweier Ausführungsbeispiele näher erläutert. Diese zeigen in
- Fig. 1: im Schema eine Kraftstoff-Einspritzanlage gemäß der Erfindung, und
- Fig. 2: den Tank und die Kraftstoffführung im Tank.

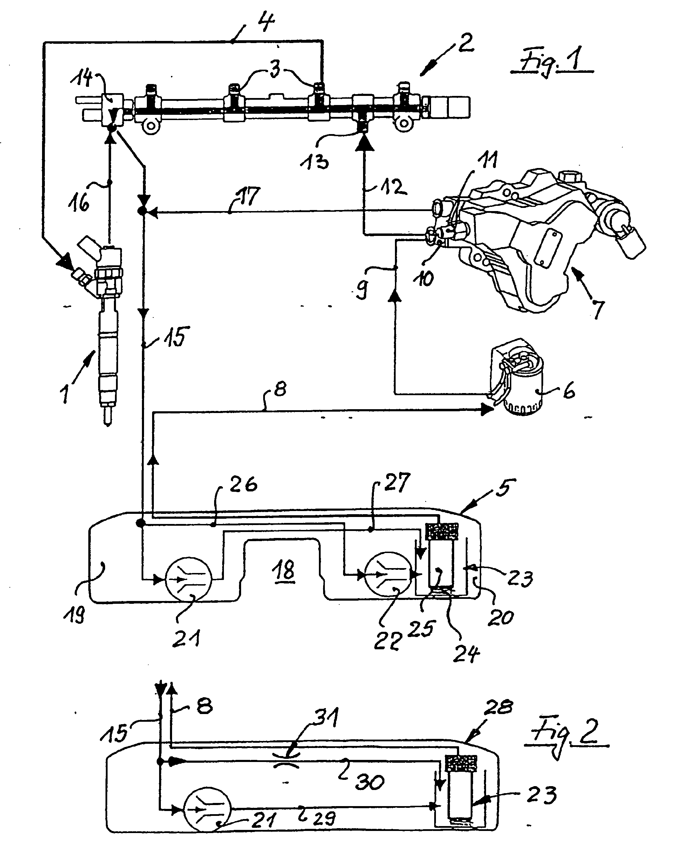

Die dargestellte Kraftstoff-Einspritzanlage gemäß Fig. 1 ist in Zuordnung zu einer nicht dargestellten Brennkraftmaschine zu sehen, in deren Brennräume der Kraftstoff über Injektoren 1 eingespritzt wird, von denen nur einer dargestellt ist und die aus einem Hochdruckspeicher 2 mit unter Druck stehendem Kraftstoff versorgt werden, wobei Speicherdrücke bis in den Bereich von etwa 1800 bar gegeben sind. Der Hochdruckspeicher 2 ist mit Anschlüssen 3 für zum jeweiligen Injektor 1 führende Leitungen 4 versehen, die möglichst kurz gehalten sind.

Der Hochdruckspeicher 2 liegt in einem Kraftstoffkreislauf, der ausgehend vom Tank 5 über einen Filter 6 zu einer Pumpe 7 führt, wobei die Leitungsverbindung vom Tank 5 zum Filter 6 mit 8 und vom Filter 6 zum zulaufseitigen Anschluss 10 der Pumpe 7 mit 9 bezeichnet ist. Vom druckseitigen Anschluss 11 der Pumpe 7 führt eine Leitung 12 zum Druckspeicher 2, wobei der diesbezügliche, speicherseitige Anschluss 13 nahe einem Ende des rohrförmigen Hochdruckspeichers 2 liegt, der im Bereich seines gegenüberliegenden Endes ein Druckregelventil 14 aufweist. Vom Druckregelventil 14 führt eine Rücklaufleitung 15 ohne Zwischenschaltung von Umschaltorganen zum Tank 5, wobei in diese Leitung 15, wie schematisiert über die Leitungen 16 und 17 angedeutet, auch die Leckagen der Einspritzinjektoren 1 sowie etwaige Leck- und/oder Schmiermengen der Pumpe 7 eingespeist werden. Diese Einspeisung ist für die von den Injektoren 1 kommenden Leckleitungen 16 im Bereich des Druckregelventiles 14, oder über dieses vorgesehen, während die von der Pumpe 7 ausgehende Leitung 17 unmittelbar in die Rücklaufleitung 15 einmündet. Für die Leitungen 16 und 17 können auch sonstige Anschlusslagen zur Leitung 15 vorgesehen sein, so insbesondere auch ein gemeinsamer Anschluss.

Bezüglich des im Ausführungsbeispiel gemäß Fig. 1 im wesentlichen über einen mantelseitigen Einzug 18, zur Überbrückung des Kardantunnels eines Fahrzeuges, in zwei seitliche Tankbereiche 19 und 20 unterteilten Tanks 5 mündet die Rücklaufleitung 15 auf den Tankbereich 19, und bildet den Zulauf auf eine Saugstrahlpumpe 21. Von der Rücklaufleitung 15 ist stromauf der Saugstrahlpumpe 21 eine auf die dem anderen Tankbereich 20 zugeordnete Saugstrahlpumpe 22 mündende Leitung 26 abgezweigt. Beide Saugstrahlpumpen 21 und 22 fördern auf einen topfartigen Einsatz 23, der als separiertes Tankvolumen einen sogenannten Schlingertopf bildet, aus dem der Kraftstoff über ein Sieb 24 und eine eintauchende Vorförderpumpe 25 über die Leitungsverbindung 8 dem Filter 6 zugeführt wird.

Die Hochdruckpumpe 7 umfasst, ohne dass dies in der Zeichnung gesondert dargestellt ist, eine Zumesseinheit insbesondere in Form eines als regelbare Drossel ausgebildeten Volumenstromventiles, über das die über die Pumpe 7 dem Druckspeicher 2 zuzuführende Kraftstoffmenge bestimmt wird, wobei diese Menge in Abhängigkeit von der Kraftstofftemperatur, die bevorzugt an einem der Pumpe 7 zugeordneten Temperatursensor erfasst wird, bei unterhalb einer der Betriebsfähigkeitstemperatur des Kraftstoffes liegenden Mindesttemperatur größer ist als die über die Einspritzinjektoren 1 einzuspritzende Kraftstoffmenge, also eine Überschussmenge enthält. Hierdurch ergibt sich im Druckspeicher 2 gegenüber einem vorgegebenen Arbeitsdruck ein Überdruck, der dazu führt, dass das Druckregelventil 14 öffnet und einen der Überschussmenge entsprechenden Anteil des verdichteten Kraftstoffes unter Entspannung auf die Rücklaufleitung 15 abgibt. Die Entspannung bedingt eine Erwärmung des Kraftstoffes, so dass in der Saugstrahlpumpe 21 und in der Saugstrahlpumpe 22, die über die Zweigleitung 26 an die Rücklaufleitung 15 angeschlossen ist, eine Vermischung des erwärmten Kraftstoffanteiles mit aus dem Tankinhalt entnommenen Kraftstoff eintritt. Dieser erwärmte Kraftstoffanteil wird von beiden Saugstrahlpumpen 21 und 22, im Falle der Saugstrahlpumpe 21 über die Leitung 27, dem topfartigen Einsatz 23 zugeführt, so dass sich trotz der unmittelbaren Rückführung der erwärmten Überschussmenge über die Leitung 15 auf den Tank 5 die gezielte Aufheizung der über die Saugstrahlpumpen 21 und 22 erfassten und auf den topfförmigen Einsatz 23 geförderten Kraftstoffmenge ergibt, womit sichergestellt ist, dass die Vorförderpumpe 25, weitgehend unabhängig von der Kraftstofftemperatur im Tank, mit jeweils erwärmtem Kraftstoff beaufschlagt wird.

Daraus ergibt sich bei noch kaltem Tankinhalt eine hinreichende Aufheizung des verhältnismäßig kleinen, separierten Volumens des topfartigen Einsatzes 23, so dass die zu Erwärmungszwecken verdichtete und nachfolgend entspannte Überschussmenge verhältnismäßig klein gehalten werden kann und trotz der unmittelbaren Verbindung des Druckregelventiles 14 zum Tank 5 zu einer schnellen Aufheizung der der Pumpe 7 zugeführten Kraftstoffmenge führt. Der Pumpe 7 ist bevorzugt im Rahmen der Erfindung neben dem Volumenstromventil auch die Temperaturerfassung des Kraftstoffes über einen Temperatursensor zugeordnet, so dass sich ein sehr komplexer Aufbau ergibt und auch zusammengefasste Verbindungswege zum nicht dargestellten Steuergerät möglich sind.

Ist die Betriebsfähigkeitstemperatur des Kraftstoffes erreicht, also eine vorgegebene Kraftstoff-Mindesttemperatur überschritten, so kann die über die der Pumpe 7 zugeordnete Zumesseinheit, insbesondere in der Ausbildung als Volumenstromventil, die der Pumpe 7 zugeführte und über diese auf den Druckspeicher 2 geförderte Kraftstoffmenge an der Menge orientiert werden, die über die Einspritzinjektoren 1 eingespritzt wird, so dass über das Druckregelventil 14 nur noch ein Mengenausgleich erfolgt, über den unzulässig hohe Drücke im Hochdruckspeicher 2 vermieden werden, wobei sich aus der Druckbegrenzung ergebende Restmengen in Verbindung mit Leckagen und Schmiermengen das Temperaturniveau im Kraftstoffkreislauf nur noch geringfügig beeinflussen.

Durch die Erfindung ist somit eine Kraftstoff-Einspritzanlage für in ihrer Zähigkeit temperaturabhängige Kraftstoffe, insbesondere Dieselkraftstoffe geschaffen, die es mit einfachen Mitteln ermöglicht, die Kraftstofftemperatur auch bei tiefen Ausgangstemperaturen zeitnah auf eine erforderliche Mindesttemperatur anzuheben und dadurch Beeinträchtigungen der Betriebsfähigkeit der Kraftstoff-Einspritzanlage und der zugehörigen Brennkraftmaschine zu vermeiden.

Anhand der Fig. 1 erfolgte die Erläuterung in Bezug auf einen mehrere Teilbereiche 19, 20 umfassenden Tank 5, der auch anderweitig gekammert sein kann. Fig. 2 zeigt in entsprechender Einbindung in die Kraftstoff-Einspritzanlage gemäß Fig. 1 einen nicht unterteilten Tank 28. Auch dieser weist einen Einsatz 23 auf, auf den eine an die Rücklaufleitung 15 angeschlossene Saugstrahlpumpe 21 fördert, deren Verbindungsleitung zum Einsatz 23 mit 29 bezeichnet ist. Parallel wird der Einsatz 23 über eine Bypassleitung 30 an die Rücklaufleitung 15 angeschlossen, wobei in der Bypassleitung eine Drossel 31 angeordnet ist, über die strömungstechnisch Verhälnisse geschaffen werden können, die denen beim Einsatz von zwei Saugstrahlpumpen 21 und 22 gemäß Fig. 1 entsprechen, so dass die unterschiedlichen Tankgestaltungen gemäß Fig. 1 und 2 ohne Rückwirkung auf die sonstige Gestaltung der Einspritzanlage eingesetzt werden können, und dementsprechend auch die gleichen Vorteile erreichbar sind.

## Patentansprüche

1. Verfahren zum Betrieb einer Kraftstoff-Einspritzanlage für mit Speicherdruckeinspritzung arbeitende Brennkraftmaschinen und mit über einen Tank (5,28) führendem Kraftstoffkreislauf, bei dem der Kraftstoff zulaufseitig aus dem Tank (5,28) temperaturabhängig volumenstromgeregelt einer Hochdruckpumpe (7) zugeführt und über diese auf einen Druckspeicher (2) gefördert wird, wobei die Fördermenge der Hochdruckpumpe (7) bei einer Kraftstoff-Mindesttemperatur, die über einer Betriebsfähigkeitstemperatur des Kraftstoffes liegt, der über Einspritzinjektoren (1) eingespritzten Kraftstoffmenge und bei unter der Mindesttemperatur liegenden Kraftstofftemperaturen dieser Einspritzmenge zuzüglich einer Überschussmenge entspricht, die - zur Erwärmung durch Entspannung in Abhängigkeit vom Druck im Druckspeicher (2) geregelt - vom Druckspeicher über ein Druckregelventi (14) ausgehend einschließlich Leck-und Schmiermengen in den in Förderrichtung der Hochdruckpumpe durchflossenen Kraftstoffkreislauf zurückgeführt wird,
**dadurch gekennzeichnet,**
**dass** die Überschussmenge einschließlich Leck- und Schmiermengen ausschließlich unmittelbar dem Tank (5, 28) zugeführt und über den Tank (5, 28) aus einem separierten Tankvolumen in den Zulauf zur Hochdruckpumpe (7) eingespeist wird.

2. Verfahren nach Anspruch 1,
**dadurch gekennzeichnet,**
**dass** die Hochdruckpumpe (7) bei unter der Mindesttemperatur liegender Kraftstofftemperatur ohne Volumenstrombegrenzung betrieben wird.

3. Verfahren nach Anspruch 2,
**dadurch gekennzeichnet,**
**dass** die Hochdruckpumpe (7) bei unter der Mindesttemperatur liegender Kraftstofftemperatur als ungeregelte Pumpe betrieben wird.

4. Kraftstoff-Einspritzanlage für mit Speicherdruckeinspritzung arbeitende Brennkraftmaschinen zur Durchführung des Verfahrens nach Anspruch 1 mit zulaufseitig aus einem Tank über eine volumenstromregelnde Zumesseinheit versorgter Hochdruckpumpe, die auf einen Hochdruckspeicher (2) fördert, dem nachgeordnet eine Druckregeleinheit (14) zugeordnet ist, die im über den Tank führenden Kraftstoffkreislauf zur Hochdruckpumpe (7) liegt,
**dadurch gekennzeichnet,**
**dass** der Druckregeleinheit, Druckregelventil (14) in Durchlaufrichtung des Kraftstoffkreislaufes eine ausschließlich auf den Tank (5) ausmündende Leitungsverbindung, Rücklaufleitung (15) nachgeordnet ist.

5. Kraftstoff-Einspritzanlage nach Anspruch 4,
**dadurch gekennzeichnet,**
**dass** der pumpenseitige Anschluss (13) des Druckspeichers (2) und der Druckregeleinheit, Druckregelventil (14) zueinander beabstandet am Druckspeicher (2) angeordnet sind.

6. Kraftstoff-Einspritzanlage nach Anspruch 5,
**dadurch gekennzeichnet,**
**dass** der pumpenseitige Anschluss (13) des Druckspeichers (2) und die Druckregeleinheit, Druckregelventil (14) einander gegenüberliegenden Enden des rohrförmigen Druckspeichers (2) zugeordnet sind.

7. Kraftstoff-Einspritzanlage nach einem der Ansprüche 4 bis 6,
**dadurch gekennzeichnet,**
**dass** die über die Leitungsverbindung (15) dem Tank zugeführte Kraftstoffmenge in ein separiertes Tankvolumen, insbesondere einen topfartigen Einsatz (23) im Tankinnenraum eingespeist wird, der einen Aufnahmeraum für den saugseitigen Anschluss einer Vorförderpumpe (25) bildet.

8. Kraftstoff-Einspritzanlage nach Anspruch 7,
**dadurch gekennzeichnet,**
**dass** die Kraftstoffzuführung auf das separierte Tankvolumen, insbesondere einen topfartigen Einsatz (23), über eine an die Rücklaufleitung (15) angeschlossene Saugstrahlpumpe (21) erfolgt und dass parallel hierzu eine Bypassverbindung, Leitung (26; 30) zwischen Rücklaufleitung (15) und separiertem Tankvolumen, Einsatz (23) vorgesehen ist.

9. Kraftstoff-Einspritzanlage nach Anspruch 8,
**dadurch gekennzeichnet,**
**dass** in der Bypassverbindung ein Strömungswiderstand, Drossel (31) angeordnet ist.

10. Kraftstoff-Einspritzanlage nach Anspruch 9,
**dadurch gekennzeichnet,**
**dass** der Strömungswiderstand durch eine Drossel (31) gebildet ist.

11. Kraftstoff-Einspritzanlage nach Anspruch 9,
**dadurch gekennzeichnet,**
**dass** der Strömungswiderstand durch eine Saugstrahlpumpe (22) gebildet ist.

12. Kraftstoff-Einspritzanlage nach einem der Ansprüche 9 bis 11,
**dadurch gekennzeichnet,**
**dass** der Strömungswiderstand von Drossel (31) und Saugstrahlpumpe (22) gleiche Größenordnung aufweist, insbesondere gleich groß ist.

## Claims

1. Method for operating a fuel injection system for internal combustion engines operating with common rail injection and with a fuel circuit routed via a tank (5, 28), wherein the fuel is fed on the inlet side from the tank (5, 28) to a high-pressure pump (7) in a temperature-dependent and flow-controlled manner and conveyed via this pump (7) to a pressure accumulator (12), wherein the rate of delivery of the high-pressure pump (7) corresponds, at a minimum fuel temperature which is higher than a usability temperature of the fuel, to the fuel quantity injected via the injectors (1) and, at a fuel temperature below the minimum temperature, to this injected quantity plus an excess quantity which - controlled as a function of the pressure in the pressure accumulator (2) for heating through expansion - is returned, including leakage and lubricating quantities, from the pressure accumulator via a pressure control valve (14) to the fuel circuit through which fuel flows in the delivery direction of the high-pressure pump,
**characterised in that**
the excess quantity including the leakage and lubricating quantities is exclusively fed directly to the tank (5, 28) and from the tank (5, 28) into the intake of the high-pressure pump (7) from a separated tank volume.

2. Method according to claim 1,
**characterised in that**
the high-pressure pump (7) is operated without flow restriction if the fuel temperature is below the minimum temperature.

3. Method according to claim 2,
**characterised in that**
the high-pressure pump (7) is operated as an uncontrolled pump if the fuel temperature is below the minimum temperature.

4. Fuel injection system for internal combustion engines operating with common rail injection for carrying out the method according to claim 1, the system comprising a high-pressure pump which is supplied on the inlet side from a tank via a flow-controlling metering unit and which delivers to a high-pressure accumulator (2) to which is assigned a downstream pressure control unit (14) provided in the fuel circuit routed via the tank to the high-pressure pump (7),
**characterised in that**
a line connection/return line (15) exclusively terminating into the tank (5) is provided downstream of the pressure control unit/pressure control valve (14) in the direction of flow of the fuel circuit.

5. Fuel injection system according to claim 4,
**characterised in that**
the pump-side connection (13) of the pressure accumulator (2) and the pressure control unit/pressure control valve (14) are arranged on the pressure accumulator (2) at a distance from each other.

6. Fuel injection system according to claim 5,
**characterised in that**
the pump-side connection (13) of the pressure accumulator (2) and the pressure control unit/pressure control valve (14) are assigned to opposite ends of the tubular pressure accumulator (2).

7. Fuel injection system according to any of claims 4 to 6,
**characterised in that**
the fuel quantity fed to the tank via the line connection (15) is fed into a separated tank volume, in particular into a pot-like insert (23) in the tank interior which forms a receiver for the suction-side connection of a pre-supply pump (25).

8. Fuel injection system according to claim 7,
**characterised in that**
the fuel is supplied to the separated tank volume, in particular into a pot-like insert (23), via an ejector pump (21) connected to the return line (15), and **in that** parallel thereto a bypass connection/line (26; 30) is provided between the return line (15) and the separated tank volume/insert (23).

9. Fuel injection system according to claim 8,
**characterised in that**
an flow resistance/restrictor (31) is provided in the bypass connection.

10. Fuel injection system according to claim 9,
**characterised in that**
the flow resistance is represented by a restrictor (31).

11. Fuel injection system according to claim 9,
**characterised in that**
the flow resistance is represented by an ejector pump (22).

12. Fuel injection system according to any of claims 9 to 12,
**characterised in that**
the flow resistances of the restrictor (31) and the ejector pump (22) have the same magnitude, being in particular equal.

## Revendications

1. Procédé d'utilisation d'un dispositif d'injection de carburant pour un moteur à combustion interne fonctionnant avec une injection à accumulateur de pression et un circuit de carburant menant à un réservoir, une pompe à haute pression (7) étant alimentée en carburant, côté alimentation, à partir du réservoir (528) par débit volumétrique régulé en fonction de la température et qui transporte le carburant dans un accumulateur de pression (2), le débit de transport de la pompe haute pression (7) - lorsque la température minimum du carburant est supérieure à une température de fonctionnement du carburant - correspond à la quantité de carburant injectée par des injecteurs 51) et lorsque les températures du carburant sont inférieures à la température minimale, correspond à cette quantité d'injection avec en plus une quantité excédentaire qui - réglée pour le réchauffement par détente en fonction de la pression dans l'accumulateur de pression (2) - est reconduite avec les quantités de lubrification et de fuite par l'accumulateur de pression par l'intermédiaire d'une soupape de régulation de pression (14) dans le circuit de carburant circulant dans le sens du transport de la pompe à haute pression, **caractérisé en ce que** la quantité excédentaire y compris les quantités de fuite et de lubrification est amenée uniquement directement au réservoir (5, 28) qui alimente (5, 28) à partir d'un volume de réservoir séparé la pompe haute pression (7) par une conduite d'amenée.

2. Procédé selon la revendication 1 **caractérisé en ce que** le pompe haute pression (7) fonctionne sans limitation de débit lorsque la température du carburant est inférieure à la température minimum.

3. Procédé selon la revendication 2 **caractérisé en ce que** la pompe haute pression (7) fonctionne comme une pompe non réglée lorsque la température du carburant est inférieure à la température minimum.

4. Dispositif d'injection de carburant pour des moteurs à combustion interne fonctionnant avec une injection à accumulateur de pression pour mettre en oeuvre le procédé selon la revendication 1, comportant une pompe haute pression, disposée côté alimentation d'un réservoir, dotée d'une unité de dosage réglant le débit volumétrique, laquelle alimente un accumulateur haute pression (2) qui est associée en aval à une unité de régulation de pression (14) laquelle est disposée dans le circuit de carburant menant à la pompe haute pression (7) par le réservoir, **caractérisé en ce qu'**un raccordement de conduite, conduite de retour (15) débouchant exclusivement dans le réservoir (5) est disposée en aval de l'unité de régulation de pression, soupape de régulation de pression (14) dans le sens du passage du circuit de carburant.

5. Dispositif d'injection de carburant selon la revendication 4 **caractérisé en ce que** le raccord (13) de l'accumulateur de pression (2), côté pompe,et de l'unité de régulation de pression, soupape de régulation de pression (14) sont disposées sur l'accumulateur de pression (2) de manière espacée.

6. Dispositif d'injection de carburant selon la revendication 5, **caractérisé en ce que** le raccord (13) côté pompe de l'accumulateur de pression (2) et l'unité de régulation de pression, soupape de régulation de pression (14) sont mutuellement associés aux extrémités opposées de l'accumulateur de pression (2) tubulaire.

7. Dispositif d'injection de carburant selon la revendication 4 à 6, **caractérisé en ce que** la quantité de carburant amenée au réservoir par le raccordement de conduite (15) est introduite dans un volume de réservoir séparé, en particulier dans une pièce d'insertion cupuliforme (23) à l'intérieur du réservoir lequel forme un espace de réception pour le raccord côté aspiration d'une pompe de pré-alimentation (25).

8. Dispositif d'injection de carburant selon la revendication 7, **caractérisé en ce que** l'alimentation en carburant dans le volume de réservoir séparé, en particulier dans une pièce d'insertion cupuliforme (23) s'effectue par une pompe à jet aspirant (21) raccordée à la conduite de retour (15) et **en ce que** parallèlement à celle-ci, une liaison de déviation, conduite (26, 30) est prévue entre la conduite de retour (15) et le volume de réservoir séparé (2), pièce d'insertion (23).

9. Dispositif d'injection de carburant selon la revendication 8, **caractérisé en ce que** dans la liaison de dérivation est disposée un élément de résistance, étranglement (31).

10. Dispositif d'injection de carburant selon la revendication 9 **caractérisé en ce que** l'élément de résistance est formé par un étranglement (31)

11. Dispositif d'injection de carburant selon la revendication 9 **caractérisé en ce que** l'élément de résistance est formé par une pompe à jet aspirant (22).

12. Dispositif d'injection de carburant selon l'une quelconque des revendications 9 à 11, **caractérisé en ce que** l'élément de résistance de l'étranglement (31) et de la pompe à jet aspirant (22) présente le même ordre de grandeur, en particulier sont de même taille.
